# EUROPEAN PATENT SPECIFICATION

(11) **EP 2 860 739 B1**
(45) Date of publication and mention of the grant of the patent: **21.12.2016**
(21) Application number: 14188108.6
(22) Date of filing: 08.10.2014
(51) Int. Cl.: H01F 7/06

(54) **Solenoid**
Magnetspule
Solénoïde

(30) Priority: 10.10.2013 KR 20130120419
(43) Date of publication of application: 15.04.2015
(73) Proprietor: Hyundai Heavy Industries Co., Ltd., Ulsan (KR)
(72) Inventor: Shin, Dong Kyu, Seoul (KR); Kang, Jong Sung, Yongin-si, Gyeonggi-do (KR); Cho, Dong Jin, Seoul (KR)
(74) Representative: Nederlandsch Octrooibureau

(56) References cited:
- EP-A1- 1 502 730
- EP-A2- 0 239 333
- WO-A1-02/41332
- DE-A1-102010 013 764
- JP-A- 2001 217 129

## Description

### BACKGROUND

The present disclosure relates to a solenoid and, more particularly, to a solenoid having enhanced response characteristics.

In general, a solenoid is a device in which a movable core moves in a linear manner due to a current flowing in a coil, to convert magnetic energy into kinetic energy. Solenoids are utilized in various industrial fields such as power devices, automobiles, hydraulic systems, etc.

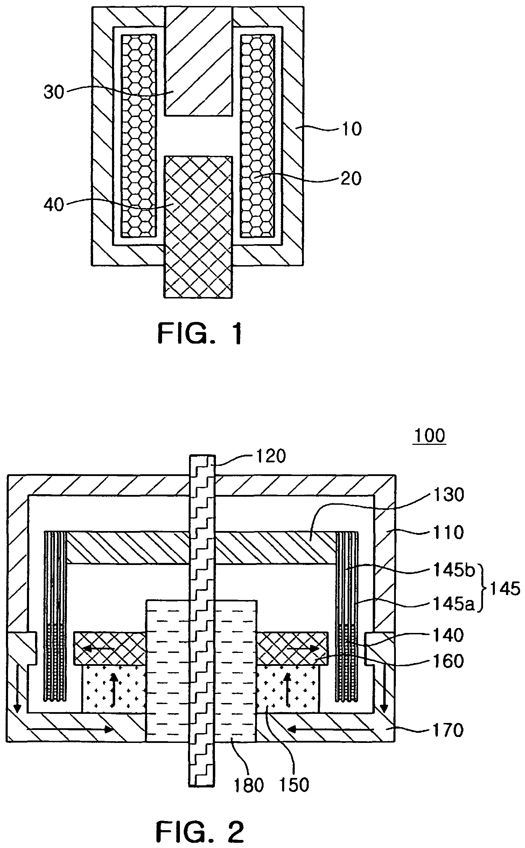

FIG. 1 is a cross-sectional view of a related art solenoid.

Referring to FIG. 1, the related art solenoid includes an external fixed iron core 10, an internal fixed iron core 30, a movable iron core 40, and a coil 20.

In the related art solenoid, when a current is applied to the coil 20, attractive force works between the movable iron core 40 and the internal fixed iron core 30 by the current flowing in the coil 20, enabling the movable iron core 40 to move in a direction toward the internal fixed iron core 30.

However, since the related art solenoid has the structure in which the movable iron core 40 moves, the mass of the moving part is relatively large, resulting in a low reaction rate, namely, a slow response speed.

In addition, since the iron cores such as the movable iron core 40, the internal fixed iron core, and the external fixed iron core 10 are positioned around the coil 20, an electrical time constant (inductance/resistance) is so large that when a voltage is applied, a current increases relatively slowly.

Driving force of a solenoid is closely related to a magnitude of a current, and here, since a current may increase relatively slowly, it is difficult for the related art solenoid to obtain fast response characteristics.

EP 0 239 333 A2 and WO 02/41332 A1 disclose a solenoid comprising a movable shaft linearly movable in an axial direction; a movable coil unit coupled to the movable shaft, the movable coil unit comprising a coil, a winding member allowing the coil to be wound there around, and a movable support fixedly coupling the winding member to the movable shaft; and a magnetic field forming unit forming a magnetic field in a direction perpendicular with respect to that of a current flowing in the movable coil unit, wherein when a current is applied to the movable coil unit, the movable coil unit is moved by a magnetic field formed by the magnetic field forming unit to move the movable shaft.

### SUMMARY

The invention as claimed in claim 1 provides a solenoid having fast response characteristics.

According to the invention as claimed in claim 1 the solenoid includes: a movable shaft linearly movable in an axial direction; a movable coil unit coupled to the movable shaft, the movable coil unit comprising a coil, a winding member allowing the coil to be wound there around, and a movable support fixedly coupling the winding member to the movable shaft; and a magnetic field forming unit forming a magnetic field in a direction perpendicular with respect to that of a current flowing in the movable coil unit, wherein when a current is applied to the movable coil unit, the movable coil unit is moved by a magnetic field formed by the magnetic field forming unit to move the movable shaft, and wherein the winding member is formed by laminating a plurality of main prepregs, the plurality of main prepregs of the winding member being spaced apart from one another, and the coil being wound in a space between the plurality of main prepregs, and the winding member further comprises a plurality of auxiliary prepregs laminated between the main prepregs such that the space is formed between the plurality of main prepregs to allow the coil to be wound therein.

JP 2001 217129 A discloses a molded coil of which an inner and outer peripheral layer is formed of a laminated structure consisting of a first sheet material of a woven textile of a fibre with a prepreg resin and a second material of an unwoven fabric of a fibre born with a prepreg resin. JP 2001 217129 A does not disclose a laminated structure of auxiliary prepregs interposed between main prepregs so as to form a space for winding the coil in that space.

The magnetic field forming unit may include: a permanent magnet disposed within or outside of the movable coil unit and forming a magnetic field in a direction perpendicular with respect to that of a current flowing in the movable coil unit; and a first yoke and a second yoke connected by the permanent magnet, disposed within and outside of the movable coil unit, and concentrating magnetic flux of the magnetic field formed by the permanent magnet on the movable coil unit.

The first yoke and the second yoke may be connected to one side and the other side of the permanent magnet to form a magnetic flux path.

The solenoid may further include: a guide unit surrounding the circumference of the movable shaft to guide a linear movement of the movable shaft.

The solenoid may further include: a cover supporting the movable shaft and forming a movement space of the movable coil unit.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a cross-sectional view illustrating the related art solenoid;
FIG. 2 is a cross-sectional view illustrating a solenoid according to an exemplary embodiment of the present disclosure;
FIG. 3 is a cross-sectional view illustrating a state in which a movable coil unit of the solenoid illustrated in FIG. 2 actuates;
FIG. 4 is a partially cross-sectional perspective view illustrating a winding member included in the solenoid illustrated in FIG. 2;
FIG. 5 is a cross-sectional view illustrating a solenoid according to another exemplary embodiment of the present disclosure;
FIG. 6 is a cross-sectional view illustrating a solenoid according to another exemplary embodiment of the present disclosure; and
FIG. 7 is a cross-sectional view illustrating a solenoid according to another exemplary embodiment of the present disclosure.

### DETAILED DESCRIPTION

Hereinafter, exemplary embodiments of the present disclosure will be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

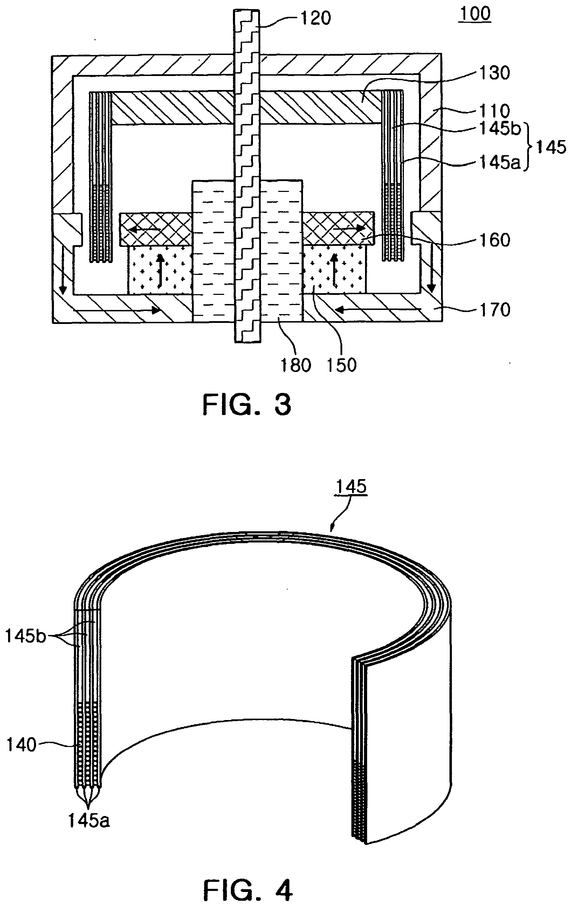

First, a solenoid according to an exemplary embodiment of the present disclosure will be described with reference to FIGS. 2 through 4. Here, FIG. 2 is a cross-sectional view illustrating a solenoid according to an exemplary embodiment of the present disclosure, FIG. 3 is a cross-sectional view illustrating a state in which a movable coil unit of the solenoid actuates, and FIG. 4 is a partially cross-sectional perspective view illustrating a winding member.

FIGS. 2 and 4, a solenoid 100 according to an exemplary embodiment of the present disclosure may include a cover 110, a movable shaft 120, a movable coil unit, and a magnetic field forming unit, and may further include a guide unit 180 guiding a linear movement of the movable shaft 120.

The cover 110 may form a portion of a casing of the solenoid 100 according to an exemplary embodiment of the present disclosure and may support the movable shaft 120 (to be described hereinafter) through a structure in which the movable shaft 120 is inserted into a hole.

In an exemplary embodiment, the cover 110 may form a movement space in which the movable coil unit is coupled with the magnetic field forming unit and moves.

As illustrated in FIGS. 2 and 3, the movable shaft 120 may be supported by the hole of the magnetic field forming unit (to be described hereinafter) and move in a linear manner in an axial direction.

The movable shaft 120 makes linear movements and transmits kinetic energy according to actuation of the solenoid 100 according to an exemplary embodiment of the present disclosure to an external element.

The movable coil unit may be formed to move in a linear manner in an inner space of the cover 110. When the movable coil unit is coupled to the movable shaft 120 and moves in a linear manner, the movable coil unit may move the movable shaft 120.

In an exemplary embodiment, the movable coil unit may include a coil 140, a winding member 145, and a movable support 130.

The coil 140 may be formed as a conducting wire wound around the winding member 145 (to be described hereinafter), in which a current may flow.

The winding member 145 may be formed as an insulator around which the coil 140 is wound.

In an exemplary embodiment, the winding member 145 may have a cylindrical shape, in which the movable shaft 120 is disposed at the center of the winding member 145.

Also, in an exemplary embodiment, the winding member 145 may be formed by laminating a plurality of prepregs.

Prepreg is a material formed on reinforcing fibers pre-impregnated with a matrix material, and a plurality of prepregs may be bonded to form a high strength, lightweight material.

In an exemplary embodiment, as illustrated in FIG. 4, the winding member 145 may be formed such that a plurality of laminated prepregs 145a and 145b are spaced apart from one another, and the coil 140 may be wound in the space between the plurality of prepregs 145a.

Namely, the coil 140 may be wound from the center of the cylindrical winding member 145 in an outward direction a plurality of times to form multiple layers, and in this case, each of the wound layers of the coil 140 may be disposed between the plurality of prepregs 145a.

For this structure, in an exemplary embodiment, the winding member 145 may include a plurality of laminated main prepregs 145a and auxiliary prepregs 145b laminated between the main prepregs 145a.

As illustrated in FIG. 4, the auxiliary prepregs 145b have a length shorter than that of the main prepregs 145a, forming a space corresponding to the thickness of the coil 140 between the main prepregs 145a.

The structure in which the main prepregs 145a support each of the plurality of wound layers of the coil 140 on both sides is advantageous in that a coupling structure of the winding member 145 and the coil 140 is stable and the movable coil unit is formed to be thin and light.

Also, since each of the wound layers of the coil 140 is firmly inserted between the prepregs 145a and 145b, behaviors of the coil 140 and the winding member 145 may be consistent with each other.

The winding member 145 having the foregoing configuration may be formed to be lighter than a general coil bobbin, and thus, a driving unit may be lightweight to significantly enhance a response speed of the solenoid.

In particular, since the plurality of thin prepregs 145a and 145b are laminated to form the winding member 145, an overall thickness of the winding member 145 may be formed to be thin, reducing a space between a first yoke 160 and a second yoke 170 to be described hereinafter. The reduction in the space between the first yoke 160 and the second yoke 170 may lead to an increase in a magnetic field applied to the coil 140, increasing driving force of the solenoid to resultantly enhance a working speed of the solenoid.

The movable support 130 is a member fixedly coupling the winding member 145 to the movable shaft 120. In an exemplary embodiment, the movable support 130 may be formed as a member connected to one end of the winding member 145 at one outer side thereof and having the movable shaft 120 coupled to the hole thereof, but the present disclosure is not limited thereto.

The magnetic field forming unit may form a magnetic field in a direction perpendicular with respect to that of a current flowing in the movable coil unit.

In an exemplary embodiment, the magnetic field forming unit may include a permanent magnet 150, the first yoke 160, and the second yoke 170.

The permanent magnet 150 may be disposed within or outside of the movable coil unit and may form a magnetic field in a direction perpendicular with respect to that of a current flowing in the movable coil unit.

In an exemplary embodiment, as illustrated in FIGS. 2 and 3, the permanent magnet 150 may be provided on an inner side of the coil 140 provided in the movable coil unit.

The first yoke 160 and the second yoke 170 may be connected by the permanent magnet 150 and disposed within and outside of the movable coil unit, respectively, to enable magnetic flux of the magnetic field formed by the permanent magnet 150 to be concentrated on the movable coil unit.

In an exemplary embodiment, as illustrated in FIGS. 2 and 3, the first yoke 160 may be connected to one side of the permanent magnet 150 so as to be disposed at the inner side of the coil 140 and protrude toward the coil 140 at one end thereof.

As illustrated in FIGS. 2 and 3, the second yoke 170 may be connected to the other side of the permanent magnet 150 so as to be disposed outside of the coil 140 and protrude toward the coil 140 at one end thereof.

Through such a configuration, the coil 140 may be disposed between the first yoke 160 and the second yoke 170.

Here, the first yoke 160 and the second yoke 170 may be formed as magnets to form a magnetic flux path of magnetic flux generated by the permanent magnet 150.

In the configuration, the permanent magnet 150, the first yoke 160, and the second yoke 170 may form a magnetic field in a direction perpendicular with respect to that of a current flowing in the coil 140.

Namely, as indicated by the arrows in FIGS. 2 and 3, the permanent magnet 150, the first yoke 160, and the second yoke 170 may exert magnetic force on the coil 140 in a direction from the inner side of the coil to an outer side of the coil 140.

In this case, since magnetic flux may be concentrated on the coil 140 through the protruded structures of the first yoke 160 and the second yoke 170 toward the coil 140, strong magnetic force may act on the coil 140.

In this configuration, when a current is applied to the coil 140 of the movable coil unit, the movable coil unit is moved by a magnetic field formed by the magnetic field forming unit to move the movable shaft 120.

In other words, when a current is applied to the coil, the current flows in a vertical direction in the coil 140 within the magnetic field formed by the permanent magnet 150, the first yoke 160, and the second yoke 170 and the coil 140 may be moved in a linear manner upwardly by Lorentz force as illustrated in FIG. 3.

Although not shown, in an exemplary embodiment, an operation of returning the movable coil unit to its original position when the current supplied to the coil 140 is released may be implemented by an elastic member (not shown) such as a spring.

The guide unit 180 is formed to surround the circumference of the movable shaft 120 in an axial direction to guide a linear movement of the movable shaft 120. In an exemplary embodiment, the guide unit 180 may be formed as an insulator having a hole into which the movable shaft 120 is inserted and an outer edge thereof to which the permanent magnet 150, the first yoke 160, and the second yoke 170 are fixed.

Unlike the related art solenoid illustrated in FIG. 1, the moving part of the solenoid 100 according to an exemplary embodiment of the present disclosure includes the lightweight coil 140 and the winding member 145, and thus, a response speed is fast.

Also, in the solenoid 100 according to an exemplary embodiment of the present disclosure, since the coil 140 has low inductance, an electrical time constant is small, obtaining a fast response speed.

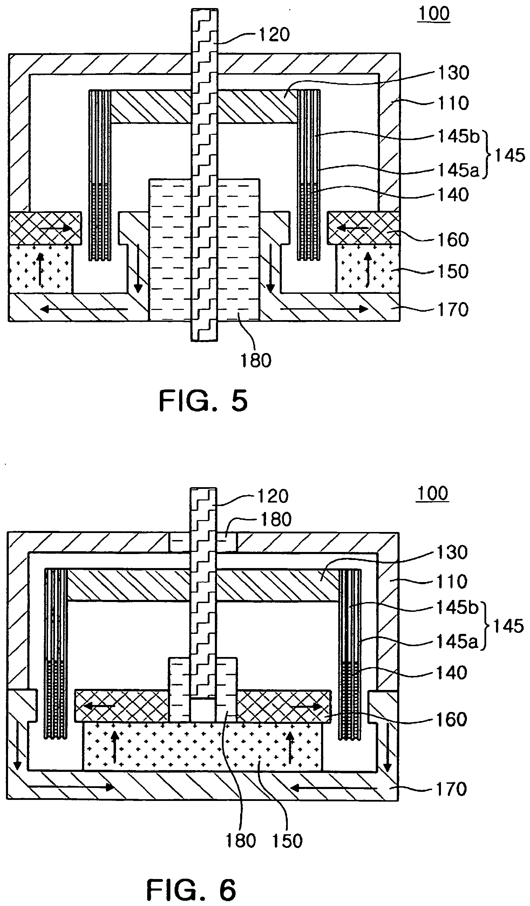

Other exemplary embodiments of the present disclosure will be described with reference to FIGS. 5 through 7. Here, FIGS. 5 through 7 are cross-sectional views illustrating other exemplary embodiments of the present disclosure, respectively.

In a solenoid 100 according to another exemplary embodiment of the present disclosure illustrated in FIG. 5, a permanent magnet 150 and a first yoke 160 may be disposed outside of a coil 140, unlike the solenoid 100 according to the exemplary embodiment of the present disclosure described above with reference to FIGS. 2 and 3.

As illustrated in FIG. 5, in the solenoid 100 according to another exemplary embodiment of the present disclosure, the movable support 130 is formed to be shorter and the winding member 145 and the coil 140 may have a smaller diameter, further reducing the weight of a moving part.

In a solenoid 100 according to another exemplary embodiment of the present disclosure illustrated in FIG. 6, a movable shaft 120 may be formed to be short and not long enough to penetrate through a permanent magnet 150, a first yoke 160, and a second yoke 170 but only to be able to penetrate through the cover 110, unlike the solenoid 100 according to the exemplary embodiment of the present disclosure described above with reference to FIGS. 2 and 3.

In the solenoid 100 according to another exemplary embodiment of the present disclosure illustrated in FIG. 6, since the weight of the movable shaft 120 is reduced, the weight of a moving part is further reduced.

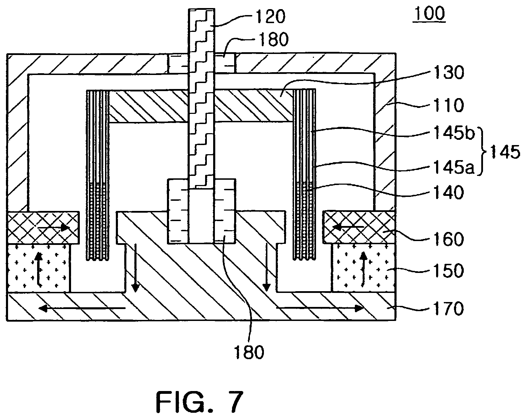

In a solenoid 100 according to another exemplary embodiment of the present disclosure illustrated in FIG. 7, a permanent magnet 150 and a first yoke 160 may be disposed outside of a coil 140, unlike the solenoid 100 according to the exemplary embodiment of the present disclosure illustrated in FIG. 5.

In the solenoid 100 according to another exemplary embodiment of the present disclosure illustrated in FIG. 7, the movable support 130 may be formed to be short, a winding member 145 and the coil 140 may have a small diameter, and a movable shaft 120 may be formed to be short, the weight of a moving part may be significantly reduced.

As set forth above, according to exemplary embodiments of the present disclosure, the weight of a moving part may be significantly reduced, and since an electrical time constant is small, a response speed of the solenoid may be enhanced.

In addition, since the moving part disposed in a magnetic field is thin, driving force may be increased, enhancing a response speed.

While exemplary embodiments have been shown and described above, it will be apparent to those skilled yin the art that modifications and variations could be made without departing from the scope of the present invention as defined by the appended claims.

## Claims

1. A solenoid (100) comprising:
a movable shaft (120) linearly movable in an axial direction;
a movable coil unit (130, 140, 145) coupled to the movable shaft, the movable coil unit comprising a coil (140), a winding member (145) allowing the coil to be wound there around, and a movable support (130) fixedly coupling the winding member (145) to the movable shaft (120); and
a magnetic field forming unit (150, 160, 170) forming a magnetic field in a direction perpendicular with respect to that of a current flowing in the movable coil unit,
wherein when a current is applied to the movable coil unit, the movable coil unit is moved by a magnetic field formed by the magnetic field forming unit to move the movable shaft, **characterized in that**
the winding member (145) is formed by a plurality of laminated main prepregs (145a), the plurality of main prepregs (145a) of the winding member (145) being spaced apart from one another, and the coil being wound in a space between the plurality of main prepregs (145a), and
the winding member further comprises a plurality of auxiliary prepregs (145b) laminated between the main prepregs (145a), wherein the auxiliary prepegs (145b) have a length shorter than that of the main prepegs (145a) forming the space corresponding to a thickness of the coil (140) between the main prepegs (145a), and wherein the coil (140) is wound in the space.

2. The solenoid of claim 1, wherein the magnetic field forming unit comprises:
a permanent magnet (150) disposed within or outside of the movable coil unit and forming a magnetic field in a direction perpendicular with respect to that of a current flowing in the movable coil unit; and
a first yoke (160) and a second yoke (170) connected by the permanent magnet (150), disposed within and outside of the movable coil unit, and concentrating magnetic flux of the magnetic field formed by the permanent magnet on the movable coil unit (130, 140, 145).

3. The solenoid of claim 2, wherein the first yoke (160) and the second yoke (170) are connected to one side and the other side of the permanent magnet (150) to form a magnetic flux path.

4. The solenoid of claim 1, further comprising a guide unit (180) surrounding the circumference of the movable shaft (120) to guide the linear movement of the movable shaft.

5. The solenoid of claim 1, further comprising a cover (110) supporting the movable shaft (120) and forming a movement space of the movable coil unit.

## Patentansprüche

1. Solenoid (100), umfassend:
einen bewegbaren Schaft (120), geradlinig bewegbar in einer axialen Richtung;
eine bewegbare Spuleneinheit (130, 140, 145), die mit dem bewegbaren Schaft verbunden ist, die bewegbare Spuleneinheit eine Spule (140) aufweist, ein Wicklungselement (145) ermöglicht, dass die Spule darauf aufgewickelt wird und eine bewegbare Halterung (130), die das Wicklungselement (145) fest mit dem bewegbaren Schaft (120) verbindet; und
eine Magnetfeldbildungseinheit (150, 160, 170), die ein Magnetfeld bildet in einer Richtung senkrecht bezüglich der eines Stroms, der in die bewegbare Spuleneinheit fließt,
wobei, wenn ein Strom an die bewegbare Spuleneinheit angelegt wird, die bewegbare Spuleneinheit durch ein von der Magnetfeldbildungseinheit gebildeten Magnetfeld bewegt wird, um den bewegbaren Schaft zu bewegen, **dadurch gekennzeichnet, dass**
das Wicklungselement (145) durch eine Vielzahl von laminierten, vorimprägnierten Hauptfasern (145a) gebildet ist, wobei die Vielzahl der vorimprägnierten Hauptfasern (145a) des Wicklungselements (145) im Abstand voneinander angeordnet ist, und die Spule in einem Raum zwischen der Vielzahl von vorimprägnierten Hauptfasern (145a) gewickelt ist, und
das Wicklungselement des Weiteren eine Vielzahl von vorimprägnierten Hilfsfasern (145b) umfasst, die zwischen den vorimprägnierten Hauptfasern (145a) laminiert sind, wobei die vorimprägnierten Hilfsfasern (145b) eine Länge besitzen, die kürzer ist als die der vorimprägnierten Hauptfasern (145a), die den Raum bilden, der einer Dicke der Spule (140) zwischen den vorimprägnierten Hauptfasern (145a) entspricht, und wobei die Spule (140) in dem Raum gewickelt ist.

2. Solenoid nach Anspruch 1, wobei die Magnetfeldbildungseinheit umfasst: einen Dauermagneten (150), der innerhalb oder außerhalb der bewegbaren Spuleneinheit angeordnet ist und ein Magnetfeld bildet in einer Richtung senkrecht bezüglich der eines Stroms, der in der bewegbaren Spuleneinheit fließt; und
ein erstes Joch (160) und ein zweites Joch (170), die durch den innerhalb und außerhalb der bewegbaren Spuleneinheit angeordneten Dauermagneten (150) verbunden sind und den Magnetfluss des Magnetfelds konzentrieren, das durch den Dauermagneten in der bewegbaren Spuleneinheit (130, 140, 145) gebildet wird.

3. Solenoid nach Anspruch 2, wobei das erste Joch (160) und das zweite Joch (170) mit der einen Seite und der anderen Seite des Dauermagneten (150) zur Bildung eines Magnetflusspfades verbunden sind.

4. Solenoid nach Anspruch 1, des Weiteren umfassend eine Führungseinheit (180), die den Umfang des bewegbaren Schaftes (120) zur Führung der geradlinigen Bewegung des bewegbaren Schaftes umgibt.

5. Solenoid nach Anspruch 1, des Weiteren umfassend eine Abdeckung (110), die den bewegbaren Schaft (120) hält und einen Bewegungsraum der bewegbaren Spuleneinheit bildet.

## Revendications

1. Solénoïde (100) comprenant :
un arbre mobile (120), mobile de manière linéaire dans une direction axiale ;
une unité de bobine mobile (130, 140, 145) couplée à l'arbre mobile, l'unité de bobine mobile comprenant une bobine (140), un élément d'enroulement (145) permettant à la bobine d'être enroulée autour de ce dernier, et un support mobile (130) couplant, de manière fixe, l'élément d'enroulement (145) à l'arbre mobile (120) ; et
une unité de formation de champ magnétique (150, 160, 170) formant un champ magnétique dans une direction perpendiculaire par rapport à celle d'un courant circulant dans l'unité de bobine mobile,
dans lequel, lorsqu'un courant est appliqué sur l'unité de bobine mobile, l'unité de bobine mobile est déplacée par un champ magnétique formé par l'unité de formation de champ magnétique pour déplacer l'arbre mobile, **caractérisé en ce que** :
l'élément d'enroulement (145) est formé par une pluralité de préimprégnés principaux laminés (145a), la pluralité de préimprégnés principaux (145a) de l'élément d'enroulement (145) étant espacés les uns des autres, et la bobine étant enroulée dans un espace entre la pluralité de préimprégnés principaux (145a), et
l'élément d'enroulement comprend en outre une pluralité de préimprégnés auxiliaires (145b) laminés entre les préimprégnés principaux (145a), dans lequel les préimprégnés auxiliaires (145b) ont une longueur plus courte que celle des préimprégnés principaux (145a) formant l'espace correspondant à une épaisseur de la bobine (140) entre les préimprégnés principaux (145a) et dans lequel la bobine (140) est enroulée dans l'espace.

2. Solénoïde selon la revendication 1, dans lequel l'unité de formation de champ magnétique comprend :
un aimant permanent (150) disposé à l'intérieur ou à l'extérieur de l'unité de bobine mobile et formant un champ magnétique dans une direction perpendiculaire par rapport à celle d'un courant circulant dans l'unité de bobine mobile ; et
une première culasse (160) et une seconde culasse (170) raccordées par un aimant permanent (150), disposées à l'intérieur et à l'extérieur de l'unité de bobine mobile, et concentrant le flux magnétique du champ magnétique formé par l'aimant permanent sur l'unité de bobine mobile (130, 140, 145).

3. Solénoïde selon la revendication 2, dans lequel la première culasse (160) et la seconde culasse (170) sont raccordées sur un côté et l'autre côté de l'aimant permanent (150) pour former une trajectoire de flux magnétique.

4. Solénoïde selon la revendication 1, comprenant en outre une unité de guidage (180) entourant la circonférence de l'arbre mobile (120) pour guider le mouvement linéaire de l'arbre mobile.

5. Solénoïde selon la revendication 1, comprenant en outre un couvercle (110) supportant l'arbre mobile (120) et formant un espace de déplacement de l'unité de bobine mobile.
